# EUROPEAN PATENT SPECIFICATION

(11) **EP 1 624 586 B1**
(45) Date of publication and mention of the grant of the patent: **17.10.2007**
(21) Application number: 05254805.4
(22) Date of filing: 01.08.2005
(51) Int. Cl.: H04B 1/08, H04B 1/18, H01Q 1/44, H01Q 1/24, H01Q 1/27, H01Q 9/30, H01P 1/213, H01Q 1/36

(54) **Earphone antenna**
Kopfhörerantenne
Antenne d'écouteur

(30) Priority: 03.08.2004 JP 2004227095; 08.06.2005 JP 2005167725
(43) Date of publication of application: 08.02.2006
(73) Proprietor: Sony Corporation, Tokyo (JP)
(72) Inventor: Yoshino, Yoshitaka, Shinagawa-ku Tokyo (JP)
(74) Representative: Leppard, Andrew John

(56) References cited:
- GB-A- 2 380 861
- US-A1- 2004 142 676
- PATENT ABSTRACTS OF JAPAN vol. 1996, no. 03, 29 March 1996 (1996-03-29) -& JP 07 298384 A (SONY CORP), 10 November 1995 (1995-11-10)
- PATENT ABSTRACTS OF JAPAN vol. 008, no. 200 (E-266), 13 September 1984 (1984-09-13) & JP 59 089004 A (MATSUSHITA DENKI SANGYO KK), 23 May 1984 (1984-05-23)
- PATENT ABSTRACTS OF JAPAN vol. 2003, no. 12, 5 December 2003 (2003-12-05) -& JP 2005 064742 A (SONY CORP), 10 March 2005 (2005-03-10)
- PATENT ABSTRACTS OF JAPAN vol. 2003, no. 10, 8 October 2003 (2003-10-08) & JP 2003 163529 A (ALPS ELECTRIC CO LTD), 6 June 2003 (2003-06-06)

## Description

The present invention relates to an earphone antenna. Embodiments relate to an earphone antenna for portable wireless equipment worn on the human body during use.

Portable wireless equipment worn on the human body during use, such as a pager, a radio receiver or a liquid crystal television receiver, has heretofore used an earphone antenna which uses, as an antenna, signal wires for transmitting audio signals to a rod antenna and earphones (Japanese Patent Application Publication No. 2003-163529).

However, the portable wireless equipment using a rod antenna or an earphone antenna has drawbacks that when the equipment is used in the state of being worn on the human body, the performance of the antenna is remarkably degraded due to the wear of the equipment on the human body, so that it is difficult to obtain satisfactory reception sensitivity in the case of television broadcasting which handles signals containing a large amount of information such as video images.

In particular, the earphone antenna which uses, as an antenna, signal wires for transmitting audio signals to earphones has a drawback that since the earphones or the signal wires come in direct contact with the human body, the human body greatly influences the wireless equipment through the antenna and greatly impairs stability of reception.

Television broadcasting in Japan, for example, uses the VHF band of 90-108 MHz (1-3 ch) and 170-222 MHz (4-12 ch) and the UHF band of 470-770 MHz (13-62 ch). Accordingly, liquid crystal television receivers for receiving television broadcasting need to receive high frequency signals over an extremely wide band of 90-770 MHz, but the existing rod antenna and earphone antennas are inferior in performance to fixed types of antennas and have extreme difficulty in obtaining satisfactory sensitivity in the necessary frequency range.

In addition, the existing earphone antennas are remarkably low in sensitivity because they make use of ordinary earphones, or have a special structure in which a separate antenna wire is inserted between signal wires of earphones, or have an unremovable structure because of integral molding

JP 07 298384 A discloses a headphone unit including an antenna and a remote control unit mid-way along the headphone unit cable. The antenna is configured to extend between a headphone jack for connecting the headphone unit to an audio device and the remote control unit.

Embodiments of the present invention seek to provide an earphone antenna able to alleviate the influence of the human body and ensure stability of reception as well as to use replaceable earphone units.

According to one embodiment of the present invention, there is provided an earphone antenna comprising a coaxial cable including a coaxial core having a center conductor transmitting a high frequency signal and covered with an insulator and further covered with a shield line, an insulator-covered signal wire for an audio signal, and an insulator-covered ground wire, the coaxial cable at one end being connectable to a wireless equipment body via a multiple-pole jack, a connection block having a circuit device for separating an audio signal and a high frequency signal and provided at another end of the coaxial cable, wherein a pin jack connector to which an earphone cable functioning as antenna wire may be removably connected is provided in the connection block so that an earphone unit having an earphone to which an audio signal may be supplied via the earphone cable may be removably connected to the connection block; wherein an antenna device is provided in the connection block to function as an antenna even if the earphone unit is removed from the connection block.

In the earphone antenna according to an embodiment of the present invention, instead of the earphone unit, a speaker may be connected to the connection block via the pin jack connector.

In the earphone antenna according to an embodiment of the present invention, instead of the earphone unit, a rod antenna may be connected to the connection block via the pin jack connector.

In the earphone antenna according to an embodiment of the present invention, the pin jack connector may be equipped with a switch which opens and closes in conjunction with an action of attaching and removing the earphone cable to or from the pin jack connector.

The earphone antenna according to an embodiment of the present invention includes: the coaxial cable including the coaxial core having the center conductor extended to transmit high frequency signals and covered with the insulator and further with the shield line, the insulator-covered signal wire for audio signals, and the insulator-covered ground wire, the coaxial cable at one end being connected to the wireless equipment body via the multiple-pole jack; the connection block provided at another end of the coaxial cable and provided with the circuit device for separating audio signals and high frequency signals and the antenna device; and the earphone unit equipped with the earphone to which audio signals are to be supplied via the earphone cable connected to the connection block; and the earphone antenna is configured to cause the earphone cables to function as antenna wires. Accordingly, the influence of the human body can be alleviated to ensure stability of reception. In addition, the pin jack connector to which the earphone cables are removably connected is provided in the connection block and the earphone unit is removably provided. Accordingly, the earphone unit is replaceable, so that ordinary earphones can be used. In addition, in the earphone antenna according to the embodiment of the present invention, instead of the earphone unit, the speaker or the rod antenna can be connected to the connection block via the pin jack connector.

Accordingly, in accordance with embodiments of the present invention, it is possible to provide an earphone antenna able to alleviate the influence of the human body and ensure stability of reception as well as to use replaceable earphone units.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Fig. 1 is a schematic view showing a configuration of a liquid crystal television receiver to which an embodiment of the present invention is applied;
Fig. 2 is a schematic view showing a configuration of a pin jack connector which connects an earphone unit to an earphone antenna of the liquid crystal television receiver;
Fig. 3 is a schematic view showing a configuration of a pin jack connector which connects a receiver body and the earphone antenna in the liquid crystal television receiver;
Fig. 4 is a block diagram showing a configuration of the receiver body;
Fig. 5 is a schematic view showing a structure of a coaxial cable constituting part of the earphone antenna;
Fig. 6 is a schematic view showing a configuration of a connection block constituting part of the earphone antenna;
Fig. 7 is a circuit configuration diagram showing an electrical configuration of the earphone antenna;
Fig. 8 is a schematic view showing another configuration example of the pin jack connector which connects the earphone unit to the earphone antenna of the liquid crystal television receiver; and
Fig. 9 is a schematic view showing a state (A) in which an external speaker, instead of the earphone unit, is connected to the connection block via the pin jack connector, and a state (B) in which a rod antenna, instead of the earphone unit, is connected to the connection block via the pin jack connector.

An embodiment of the present invention will be described below in detail with reference to the accompanying drawings.

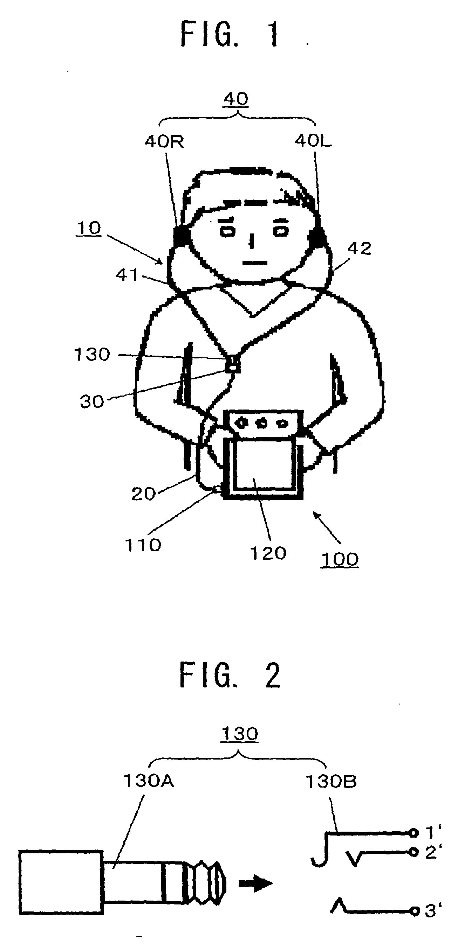

The present invention is applied to a liquid crystal television receiver 100 having the configuration shown in Fig. 1 by way of example.

In the liquid crystal television receiver 100 shown in Fig. 1, an earphone antenna 10 according to the embodiment of the present invention is connected to a receiver body 120 via a pin jack connector 110.

The earphone antenna 10 includes a coaxial cable 20 connected at one end to the receiver body 120 via the 5-pole pin jack connector 110, a connection block 30 connected to the other end of the coaxial cable 20, and an earphone unit 40 equipped with stereo earphones 40R and 40L each provided at one end of a respective one of two earphone cables 41 and 42 connected to the connection block 30 via a pin jack connector 130.

The pin jack connector 130 includes, as shown in Fig. 2, a pin 130A and a jack 130B each having three poles to which three kinds of lines, i.e., an audio L channel (L), an audio R channel (R) and ground (Gnd), are to be connected, respectively.

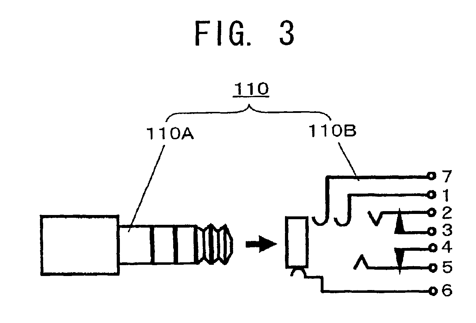

The pin jack connector 110 includes, as shown in Fig. 3, a pin 110A and a jack 110B each having five poles to which five kinds of lines, i.e., an antenna (Ant), a headphone detection line (detection), the audio L channel (L), the audio R channel (R) and the ground (Gnd), are to be connected, respectively.

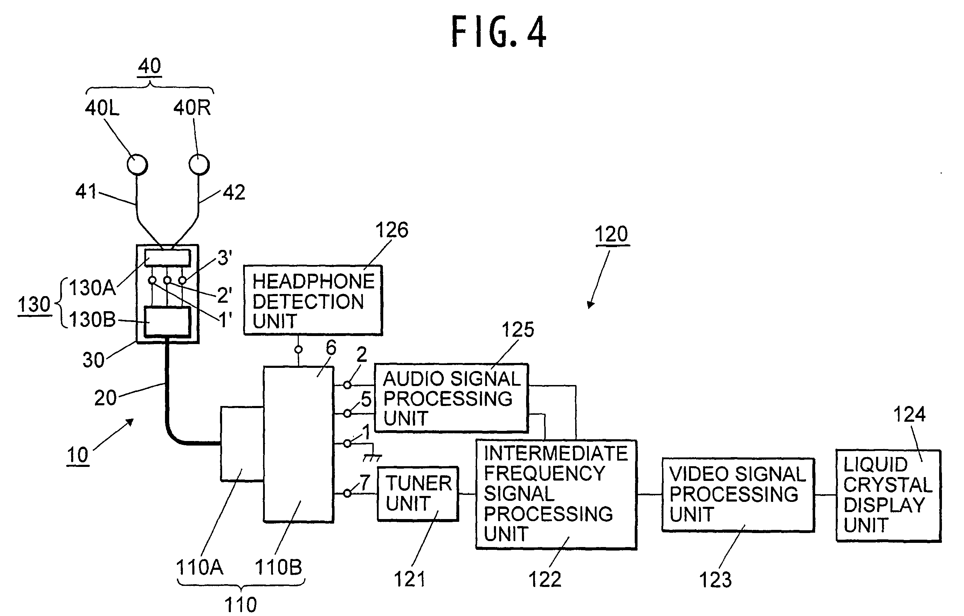

The receiver body 120 includes, as shown in Fig. 4, a tuner unit 121, an intermediate frequency signal processing unit 122 connected to the tuner unit 121, a video signal processing unit 123 and an audio signal processing unit 125 both of which are connected to the intermediate frequency signal processing unit 122, a liquid crystal display unit 124 connected to the video signal processing unit 123, and the jack 110B constituting the pin jack connector 110.

In the liquid crystal television receiver 100, the jack 110B is, as shown in Fig. 3, equipped with five movable terminals 1, 2, 5, 6 and 7 and two fixing terminals 3 and 4, and as shown in Fig. 4, the movable terminal 7 is connected to the tuner unit 121 as an antenna terminal (Ant), while the movable terminals 2 and 5 are connected to the audio signal processing unit 125 as the audio L channel terminal (L) and the audio R channel terminal (R), respectively. The movable terminal 6 is connected to a headphone detection unit 126 as a headphone detection terminal. The movable terminal 1 is connected to GND of a circuit board of the wireless equipment body as a common ground terminal (Gnd) of the wireless equipment. The fixing terminals 3 and 4 are terminals for fixing the pin 110A in position.

Although not shown, a capacitor having a capacitance of approximately 1,000 pF is generally inserted between the movable terminal 7 and the tuner unit 121 in order to prevent electrostatic discharge damage.

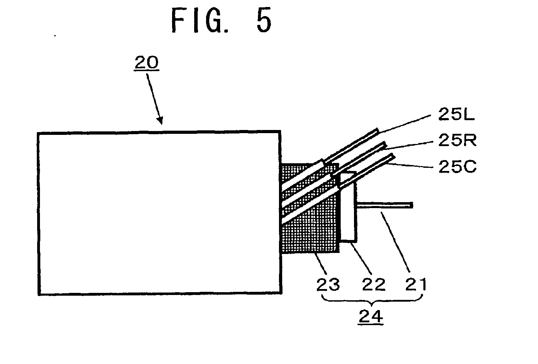

As shown in Fig. 5, the coaxial cable 20 includes a coaxial core 24, insulator-covered signal wires 25L and 25R for audio signals, and an insulator-covered headphone-detecting signal wire 25C. The coaxial core 24 has a center conductor 21 extended to transmit high frequency signals and covered with an insulator 22 and further with a shield 23, and the signal wires 25L and 25R and the headphone-detecting signal wire 25C are wound around the coaxial core 24 and an insulating jacket covers the outside of the wound wires 25L, 25R and 25C. The coaxial cable 20 at one end is provided with the pin 110A having five poles respectively connected to the center conductor 21 and the shield line 23 of the coaxial core 24, the signal wires 25L and 25R for audio signals, and the headphone-detecting signal wire 25C. The coaxial cable 20 at the other end is provided with the connection block 30 which is connected to the center conductor 21, the shield line 23, the signal wires 25L and 25R for audio signals, and the headphone-detecting signal wire 25C.

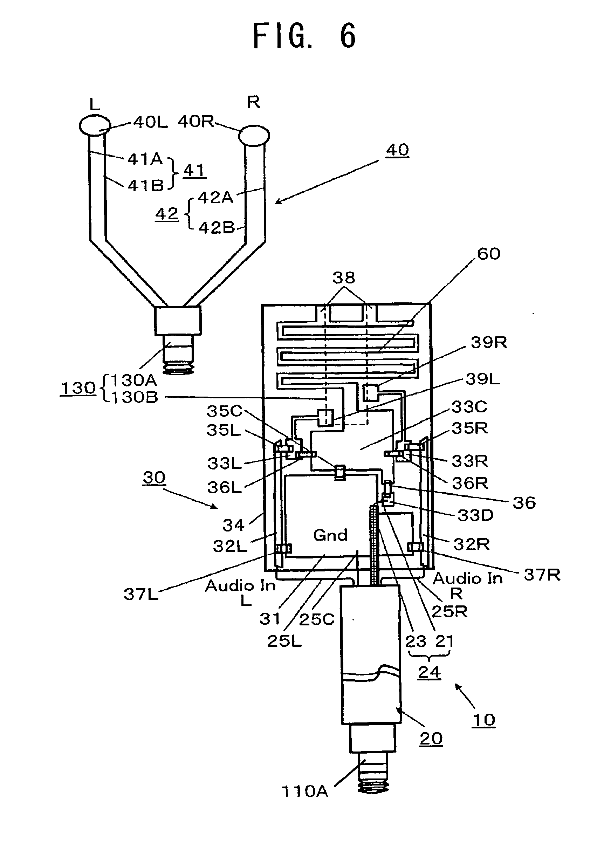

The connection block 30 is, as shown in Fig. 6, equipped with a circuit board 34 on which are formed a ground pattern 31 provided at the central location, stereo-audio-signal transmission line patterns 32L and 32R respectively provided on the both sides of the ground pattern 31, three connection lands 33L, 33R and 33C provided on an extending-end side of the ground pattern 31, and a connection land 33D provided on one side of the ground pattern 31. Mounted on the circuit board 34 are high frequency chokes 35L and 35R which respectively connect extending-end portions of the stereo-audio-signal transmission line patterns 32L and 32R to the connection lands 33L and 33R, a high frequency choke 35C which connects the connection land 33C to the connection land 33C, a chip capacitor 36L which connects the connection land 33L and the connection land 33C, a chip capacitor 36R which connects the connection land 33R and the connection land 33C, and a chip capacitor 36 which connects the connection land 33C and the connection land 33D.

The stereo-audio-signal transmission line patterns 32L and 32R formed on the circuit board 34 are connected to the ground pattern 31 via chip capacitors 37L and 37R, respectively, so that the transmission line patterns 32L and 32R can be integrated with the ground (Gnd) on a high-frequency basis.

The jack 130B of the pin jack connector 130 is, as shown in Fig. 2, equipped with an L terminal 2' to which the audio L channel (L) is to be connected, an R terminal 3' to which the audio R channel (R) is to be connected, and a ground terminal 1' for the ground (Gnd).

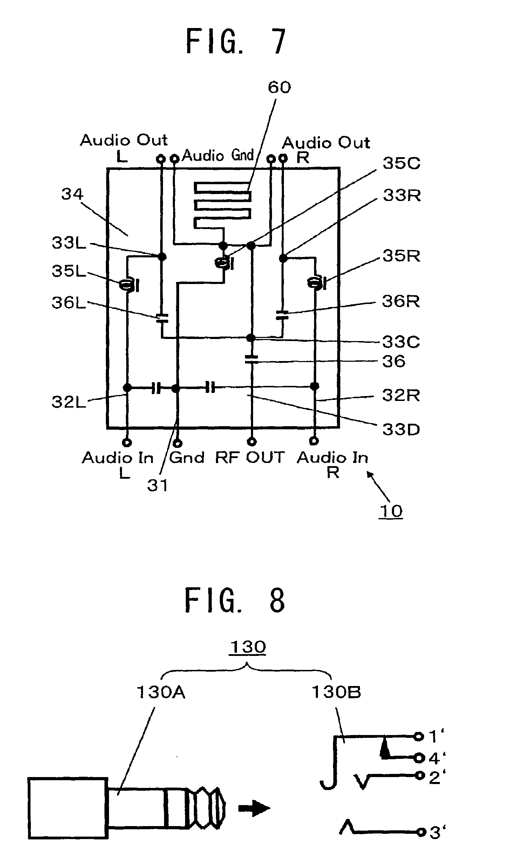

The connection block 30 is provided with the connector jack 130B in order to transmit audio signals, and as shown in Figs. 6 and 7, the land 33L connected to the left transmission line pattern 32L by the high frequency choke 35L and an L land 39L to which the L terminal 2' of the connector jack 130B is fixed are connected to each other in order to supply left audio signals to the left earphone 40L. In addition, the land 33R connected to the right transmission line pattern 32R by the high frequency choke 35R and an R land 39R to which the R terminal 3' of the connector jack 130B are connected to each other in order to supply right audio signals to the right earphone 40R. The connection land 33C which serves as ground for both earphones 40L and 40R and a ground land 38 to which the ground terminal 1' of the connector jack 130B are connected to each other. The connection land 33C serves as an antenna for high frequencies, and as shown in Figs. 6 and 7, a meander-shaped pattern 60 is formed to extend from the connection land 33C so that the connection land 33C functions as an antenna even when the connector pin 130A of the earphone unit 40 is removed from the connection block 30.

An electrical circuit configuration formed on the connection block 30 is shown in Fig. 7.

The coaxial cable 20 is connected to the connection block 30 in the following manner.

The left audio signal wire 25L and the right audio signal wire 25R of the coaxial cable 20 are respectively connected to the stereo-audio-signal transmission line patterns 32L and 32R formed on the circuit board 34, and the headphone-detecting signal wire 25C of the coaxial cable 20 is connected to the ground pattern 31. The center conductor 21 and the shield line 23 of the coaxial core 24 constituting the coaxial structure of the coaxial cable 20 are placed on the ground pattern 31 so that the shield line 23 is connected to the ground pattern 31 and the extending end of the center conductor 21 is connected to the connection land 33D.

In addition, the above-mentioned capacitor (not shown) for prevention of electrostatic discharge damage inserted between the movable terminal 7 and the tuner unit 121 can be substituted for the chip capacitor 36 which connects the connection land 33C and the connection land 33D. In this case, the extending end of the center conductor 21 constituting the coaxial structure of the coaxial cable 20 is directly connected to the connection land 33C.

In the present embodiment, ferrite beads, for example, BLM18HD102SN1 (1608 size) manufactured by Murata Manufacturing Co., Ltd., are used as the high frequency chokes 35L, 35R and 35C. The high frequency chokes 35L, 35R and 35C using such beads provide low impedance for audio signals in the frequency band of not higher than 20 kHz, and provide high impedance for high frequency signals so as to prevent passage of the high frequency signals. Each of the chip capacitors 36L, 36R, 37L and 37R uses a type having a capacitance of 1,000 pF, and provides high impedance for audio signals in the frequency band of not higher than 20 kHz to prevent passage of the audio signals, and provide low impedance for high frequency signals. The high frequency chokes 35L, 35R and 35C and the chip capacitors 36L, 36R, 37L and 37R function as circuit devices for separating audio signals and high frequency signals.

When the earphone unit 40 is attached to the connection block 30, the earphone antenna 10 functions as a sleeve antenna which resonates at 100 MHz in the VHF band, because the two earphone cables 41 and 42, the meander-shaped pattern 60 on the connection block 30, the shield line 23 of the coaxial core 24, and the signal wires 25L, 25R and 25C constitute such sleeve antenna. In addition, the earphone antenna 10 functions as a sleeve antenna of 1 λ at 200 MHz, and can also make use of harmonic excitations of 100 MHz and 200 MHz (the third harmonic, the fifth harmonic and the seventh harmonic) in the UHF band.

In addition, in the earphone antenna 10, the earphone unit 40 can be removably attached to the connection block 30, and even when the earphone unit 40 is removed from the connection block 30, the meander-shaped pattern 60 on the connection block 30, the shield line 23 of the coaxial core 24, and the signal wires 25L, 25R and 25C function as the sleeve antenna. In addition, receivable frequencies can be varied by adjusting the length of the meander-shaped pattern 60 formed to extend from the connection land 33C on the circuit board 34. In addition, it is possible to connect a coil to the connection land 33C instead of forming the meander-shaped pattern 60 on the circuit board 34, and in this case as well, it is possible to obtain a similar advantage.

The present invention can be applied to antennas other than the above-mentioned example, and can also be applied to a case where audio signals and high frequency signals are multiplexed in the earphone unit 40 and the coaxial cable 20 is used to construct a dipole antenna.

Since the earphone unit 40 can be separated from the earphone antenna 10 at the pin jack connector 130 provided in the connection block 30, users can freely select desired earphone units as the earphone unit 40, so that it is possible to improve convenience of users who have found it inconvenient that the earphone unit 40 does not fit their ears.

In addition, since the earphone antenna 10 functions as an antenna even when the earphone unit 40 is removed, a jack having a mute terminal 4' may also be adopted as the connector jack 130B, as shown in Fig. 8, so that the headphone-detecting signal wire 25C can be connected to the mute terminal 4' of the connector jack 130B by a method similar to that used for each of the audio signal wires 25L and 25R. The mute terminal 4' contacts the ground terminal 1' when the earphone unit 40 is removed from the connection block 30. If this configuration is applied to a portable terminal having a mute function, the portable terminal can be configured to detect the presence or absence of earphones and reproduce sound from its built-in speaker during reception of television broadcasting.

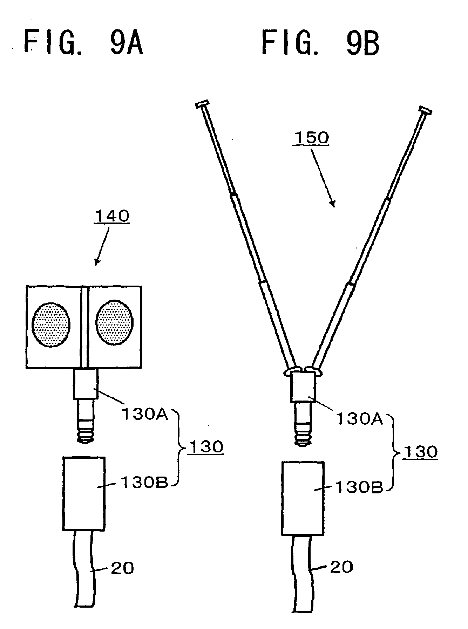

In addition, during the state A shown in Fig. 9, instead of the earphone unit 40, an external speaker 140 can be connected to the connection block 30 via the pin jack connector 130, so that the functions of both a speaker and an antenna can be satisfied even in the case of a portable terminal having no internal speakers.

In addition, the earphone antenna 10 functions as a sleeve antenna irrespective of the presence or absence of the earphone unit 40, but during the state B shown in Fig. 9, instead of the earphone unit 40, a rod antenna 150 can be connected to the connection block 30 via the pin jack connector 130 so that the rod antenna 150, the meander-shaped pattern 60 on the connection block 30, the shield line 23 of the coaxial core 24, and the signal wires 25L, 25R and 25C function as a sleeve antenna. In this case, sensitivity can be improved compared to the case where the earphone unit 40 is absent.

An embodiment provides an earphone antenna comprising a coaxial cable including a coaxial core having a center conductor transmitting a high frequency signal and covered with an insulator and further covered with a shield line, an insulator-covered signal wire for an audio signal, and an insulator-covered ground wire, the coaxial cable at one end being connectable to a wireless equipment body via a multiple-pole jack), a connection block having a circuit device for separating an audio signal and a high frequency signal and provided at another end of the coaxial cable, wherein a pin jack connector to which an earphone cable functioning as antenna wire may be removably connected is provided in the connection block so that an earphone unit having an earphone to which an audio signal may be supplied via the earphone cable may be removably connected to the connection block; wherein an antenna device is provided in the connection block to function as an antenna even if the earphone unit is removed from the connection block.

Although particular embodiments have been described herein, it will be appreciated that the invention is not limited thereto and that many modifications and additions thereto may be made within the scope of the claims.

## Claims

1. An earphone antenna (10) comprising:
a coaxial cable (20) including a coaxial core (24) having a center conductor (21) transmitting a high frequency signal and covered with an insulator (22) and further covered with a shield line (23), an insulator-covered signal wire (25L, 25R) for an audio signal, and an insulator-covered ground wire, the coaxial cable at one end being connectable to a wireless equipment body (120) via a multiple-pole jack (110A);
a connection block (30) having a circuit device for separating an audio signal and a high frequency signal and provided at another end of the coaxial cable;
wherein a pin jack connector (130B) to which an earphone cable (41, 42) functioning as antenna wire may be removably connected is provided in the connection block so that an earphone unit (40) having an earphone (40L, 40R) to which an audio signal may be supplied via the earphone cable may be removably connected to the connection block; wherein an antenna device (60) is provided in the connection block to function as an antenna even if the earphone unit is removed from the connection block.

2. The earphone antenna according to claim 1, further comprising an earphone unit (40) connected to the connection block via the pin jack connector.

3. The earphone antenna according to claim 1, further comprising a speaker (140) connected to the connection block via the pin jack connector.

4. The earphone antenna according to claim 1, further comprising a rod antenna (150) connected to the connection block via the pin jack connector.

5. The earphone antenna according to claim 1,
wherein the pin jack connector has a switch for opening and closing in conjunction with an action of attaching or removing the earphone cable to or from the pin jack connector.

## Patentansprüche

1. Kopfhörerantenne (10), welche umfasst:
ein Koaxialkabel (20), welches einen Koaxialkern (24) aufweist, der einen Mittelleiter (21) hat, der ein Hochfrequenzsignal überträgt und von einem Isolator (22) überdeckt ist und außerdem von einer Abschirmleitung (23) überdeckt ist, einen von einem Isolator überdeckten Signaldraht (25L, 25R) für ein Audiosignal, und einen von einem Isolator überdeckten Erddraht, wobei das Koaxialkabel an einem Ende mit einem drahtlosen Gerätekörper (120) über einen Mehrfachpolstecker (110A) verbindbar ist;
einen Verbindungsblock (30), der eine Schaltungseinrichtung hat, um ein Audiosignal und ein Hochfrequenzsignal zu trennen und der am anderen Ende des Koaxialkabels vorgesehen ist;
wobei ein Stift-Klinken-Stecker (130B), mit dem ein Kopfhörerkabel (41, 42), welches als Antennendraht arbeitet, lösbar verbunden werden kann, im Verbindungsblock vorgesehen ist, so dass die Kopfhörereinheit (40), welche einen Kopfhörer (40L, 40R) hat, zu welchem ein Audiosignal über ein Kopfhörerkabel geliefert werden kann, lösbar mit dem Verbindungsblock verbunden werden kann;
wobei eine Antenneneinrichtung (60) im Verbindungsblock vorgesehen ist, um als eine Antenne zu arbeiten, sogar, wenn die Kopfeinheit vom Verbindungsblock gelöst ist.

2. Kopfhörerantenne nach Anspruch 1, welche außerdem eine Kopfhörereinheit (40) aufweist, welche mit dem Verbindungsblock über die Stift-Klinken-Steckverbindung verbunden ist.

3. Kopfhörerantenne nach Anspruch 1, welche außerdem einen Lautsprecher (140) umfasst, der mit dem Verbindungsblock über die Stift-Klinken-Steckverbindung verbunden ist.

4. Kopfhörerantenne nach Anspruch 1, welche außerdem eine Stabantenne (150) aufweist, welche mit Verbindungsblock über die Stift-Klinken-Steckverbindung verbunden ist.

5. Kopfhörerantenne nach Anspruch 1,
wobei die Stift-Klinken-Steckverbindung einen Schalter zum Öffnen und Schließen in Verbindung mit einer Aktion zum Anbringen oder Lösen des Kopfhörerkabels an der oder von der Stift-Klinken-Steckverbindung hat.

## Revendications

1. Antenne (10) pour écouteur comprenant :
un câble coaxial (20) comportant une âme coaxiale (24) ayant un conducteur central (21) transmettant un signal haute fréquence et couvert d'un isolant (22) et couvert en outre d'une ligne de blindage (23), un fil de signal (25L, 25R) couvert d'isolant pour un signal audio, et un fil de terre couvert d'isolant, le câble coaxial au niveau d'une extrémité pouvant être raccordé à un corps d'équipement sans fil (120) par le biais d'une fiche jack multipolaire (110A) ;
un bloc de raccordement (30) ayant un dispositif formant circuit destiné à séparer un signal audio et un signal haute fréquence et prévu au niveau d'une autre extrémité du câble coaxial ;
dans laquelle un dispositif de raccordement à broches (130B) de fiche jack auquel un câble (41, 42) d'écouteur fonctionnant en tant qu'un fil d'antenne peut être raccordé de manière à pouvoir être retiré est prévu dans le bloc de raccordement de sorte qu'une unité (40) formant écouteurs ayant un écouteur (40L, 40R) auquel un signal audio peut être délivré par le biais du câble d'écouteur peut être raccordé de manière à pouvoir être retiré au bloc de raccordement ; dans lequel un dispositif formant antenne (60) est prévu dans le bloc de raccordement afin de fonctionner en tant qu'une antenne même si l'unité formant écouteurs est retirée du bloc de raccordement.

2. Antenne pour écouteur selon la revendication 1, comprenant en outre une unité (40) formant écouteurs raccordée au bloc de raccordement par le biais du dispositif de raccordement à broches de fiche jack.

3. Antenne pour écouteur selon la revendication 1, comprenant en outre un haut-parleur (140) raccordé au bloc de raccordement par le biais du dispositif de raccordement à broches de fiche jack.

4. Antenne pour écouteur selon la revendication 1, comprenant en outre une antenne-tige (150) raccordée au bloc de raccordement par le biais du dispositif de raccordement à broches de fiche jack.

5. Antenne pour écouteur selon la revendication 1,
dans lequel le dispositif de raccordement à broches de fiche jack a un commutateur destiné à ouvrir et fermer, conjointement avec une action d'assemblage ou de retrait du câble d'écouteur au ou du dispositif de raccordement à broches de fiche jack.
